(19) Europäisches Patentamt
European Patent Office
Office européen des brevets

(11) Publication number: 0 102 208 B1

(12) EUROPEAN PATENT SPECIFICATION

(45) Date of publication of patent specification: 19.11.87

(51) Int. Cl.[4]: B 22 C 1/22, C 08 G 59/40

(21) Application number: 83304561.0

(22) Date of filing: 05.08.83

# (54) Curable epoxy resin compositions and methods of curing them especially for preparing formed, shaped, filled bodies.

(30) Priority: 05.08.82 US 405420
22.10.82 US 436031

(43) Date of publication of application:
07.03.84 Bulletin 84/10

(45) Publication of the grant of the patent:
19.11.87 Bulletin 87/47

(84) Designated Contracting States:
AT BE CH DE FR GB IT LI LU NL SE

(56) References cited:
EP-A-0 084 689
EP-A-0 086 744
GB-A-2 066 714

(73) Proprietor: Ashland Oil, Inc.
1000 Ashland Drive
Russell Kentucky 41169 (US)

(72) Inventor: Woodson, Wayne D.
2320 North Vermilion Danville
Illinois 61832 (US)

(74) Representative: Ruffles, Graham Keith et al
MARKS & CLERK 57-60 Lincoln's Inn Fields
London WC2A 3LS (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 102 208 B1

**Description**

This invention relates to new curable epoxy resin compositions which are useful particularly but not exclusively in preparing formed, shaped, filled bodies comprising the epoxy resin composition and inorganic solid particulates. Especially useful filled bodies of this type include abrasive articles and foundry cores and moulds.

In the foundry industry, sand is coated with resin binders and formed into moulds and cores for the production of precision castings. A wide variety of production techniques have been developed, including the hot box, shell, "No-Bake", and cold-box techniques.

US Patent 3,145,438 discloses a gaseous curing process for curing resins for binding sand and abrasive granules, i.e. sand cores and moulds. The resins disclosed are primarily furfuryl alcohol-formaldehyde resins and also certain epoxy resins including epoxidized linseed oil, mono and divinylcyclohexene dioxide, butadiene dioxide, and glycidyl methacrylate and its polymers. The curing gases are strong acid gases including boron trifluoride, boron trichloride, hydrogen chloride, sulphur trioxide, etc. It was found, however, that this process caused an instantaneous curing of the resin in the region subjected to treatment by the gas and this impeded the diffusion of gas to other parts of the resin, particularly the central parts of the mixture.

Subsequently, a method was developed which avoided this difficulty. In US Patent 3,879,339, it is disclosed that sand may be coated with a suitable oxidizing agent, such as an organic peroxide, and coated with the resin to be used in binding the sand into the form of a core or mould. The sand-resin mixture is then formed into a suitable shape and treated with gaseous $SO_2$. The $SO_2$ is oxidized, *in situ*, to $SO_3$ and converted to sulphur-containing acid by water present in the mixture. The sulphur-containing acid which is generated *in situ* causes a rapid and uniform polymerization of the resin at room temperature. This process has proved successful commercially and has been applied to phenolic resins, furan resins, and urea-formaldehyde resins, as well mixtures and copolymers thereof.

In the cold box method of US Patent 3,879,339, a large variety of peroxides is disclosed which may be added to sand along with resins which are used in forming sand cores or moulds. This composition is subsequently formed into shape and treated with gaseous $SO_2$. The resins used in this process have the main disadvantage that they build up coatings in the mould. Accordingly, there is a demand for the substitution of the resins. Modifications of furane resins with epoxy groups, as mentioned in this patent, will not help as they cure too slowly and the resin coating built up in the mould is not better. In addition to that, not all organic peroxides can be used in this process because of economic and safety considerations.

The prior art discloses some applications of epoxy resins to the manufacture of foundry cores and moulds but these resins usually require the use of strong acid gases for curing which can give rise to serious problems, e.g. corrosion, etc, with the equipment and difficulties in the use of the epoxy bonded products. Therefore, none of these processes has found commercial use.

US Patent 3,107,403 discloses the preparation of sand cores or moulds using epoxy resins in which the moulding composition is cured by treatment with strong Lewis acid, such as boron trifluoride, titanium tetrachloride, tin tetrachloride, etc.

British Patent Specification 2,066,714 describes processes for preparing shaped foundry articles using a binder material which comprises an ethylenically unsaturated monomer and curing by means of a free radical initiator. The initiator comprises an organic peroxide and catalytic agent such as sulphur dioxide. Examples of monomers described as being useful include acrylates, and modified acrylate copolymers such as epoxyacrylates, polyether-acrylates, polyester-acrylates and polyester-urethane-acrylates.

European Patent Application 84689 published on 24 August 83 and thus prior art under Art 54(3) EPC only describes a process for the manufacture of a founding core or mould, in which process a composition comprising a granular filler, a synthetic resin which cures under the action of an acid and a desensitized ketone peroxide composition is formed into the founding core or mould desired and treated with sulphur dioxide, characterized in that the ketone peroxide composition contains as desensitizing agent a dialkyl ester of an aliphatic dicarboxylic acid of the general formula

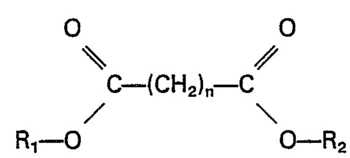

where n=1—7 and

$R_1$ and $R_2$=a branched or non-branched alkyl group having 3 to 5 carbon atoms.

European Patent Application 86744 published on 3 August 83 and thus prior art under Art 54(3) EPC only describes heat-hardenable materials essentially free of unsaturated polymerizable material which characteristically consist of (a) an epoxide resin containing a plurality of 2,3-epoxypropyl groups per molecule, (b) a boron trifluoride/amine complex as latent hardener for the epoxide resin, and (c) an organic oxidizing agent chosen from quinones, peroxides and aromatic iodosyl compounds. Hardening is typically effected by heating the mixture to 75 to 200°C for 1 to 40 minutes.

With this background, the present invention provides curable epoxy resin compositions consisting essentially of a mixture of an acid curable epoxy resin which is a mixed aliphatic-aromatic or an exclusively non-aromatic epoxy resin, and which is optionally modified by admixture in an amount of up to 50% by weight of the modified resin of one of more acrylic monomers, vinyl monomers, furfuryl alcohol, resorcinol, monomeric glycidyl compounds, formaldehyde-based phenolic resins, urea resins or melamine resins, urethane resins and diluents; and 15 to 50 percent by weight, based on the weight of the epoxy resin, of an oxidizing agent capable of reacting with sulphur dioxide to form a catalyst for curing the epoxy resin.

In the present invention, the composition "consists essentially" of the epoxy resin and the oxidizing agent, in the sense that cure is to be effected through reaction of the oxidizing agent with sulphur dioxide to form the catalyst for curing the epoxy resin. No acid catalyst is added, and in particular the present compositions do not contain a latent hardener of the kind envisaged for example in EP—A—86744.

The epoxy resins utilized in the invention may be any of the resins which are acid-curable and which are characterized by the presence of an epoxide group. Such resins have either a mixed aliphatic-aromatic or an exclusively non-aromatic (i.e., aliphatic or cycloaliphatic) molecular structure. The present invention does not extend to the use of the epoxy-modified resins of the kind mentioned in EP—A—84689. The mixed aliphatic-aromatic epoxy resins generally are prepared by the well-known reaction of a bis(hydroxyaromatic)alkane or a tetrakis(hydroxyaromatic)alkane with a halogen-substituted aliphatic epoxide in the presence of a base such as, for example, sodium hydroxide or potassium hydroxide. Examples of the halogen-substituted aliphatic epoxides include epichlorohydrin, 4-chloro-1,2-epoxybutane, 5-bromo-1,2-epoxypentane, 6-chloro-1,3-epoxyhexane, and the like. In general, it is preferred to use a chlorine substituted terminating group such that the epoxide group is on the end of the alkyl chain.

The most widely used epoxy resins are diglycidyl ethers of bisphenol A. These are conventionally made by reacting epichlorohydrin with bisphenol A in the presence of an alkaline catalyst. By controlling the operating conditions and varying the ratio of epichlorohydrin to bisphenol A, products of differing molecular weight can be made.

Other usable epoxy resins include the diglycidyl ethers of other bisphenol compounds such as bisphenol B, F, G and H.

Epoxy resins of the type described above and based on various bisphenols are available from a wide variety of commercial sources. One group is the Epon (trade mark) resins available from Shell Chemical Company. For example, "Epon 820" is an epoxy resin having an average molecular weight of about 380 and prepared from 2,2-bis(p-hydroxyphenol)propane and epichlorohydrin. Similarly, "Epon 1031" is an epoxy resin having an average molecular weight of about 616 and prepared from epichlorohydrin and symmetrical tetrakis(p-hydroxyphenol)ethane. "Epon 828" has a molecular weight of 350 to 400 and an epoxide equivalent of about 175 to 210.

Another group of commercially available epoxy resins are the EPI-REZ (trade mark) resins available from Celanese Resins, a division of Celanese Coatings Company. For example, EPI-REZ 510 and EPI-REZ 509 are commercial grades of the diglycidyl ether of bisphenol A differing slightly in viscosity and epoxide equivalent.

Another class of epoxy resins useful in the present invention is the novolacs, particularly the epoxy cresol and epoxy phenol novolacs. These are produced by reacting a novolac resin, usually formed by the reaction of orthocresol or phenol and formaldehyde, with epichlorohydrin.

Epoxy resins derived from non-aromatic materials such as aliphatic or cycloaliphatic hydroxy-containing compounds also can be utilized in the present invention. Epoxy resins having non-aromatic molecular structures are generally referred to in the art as being aliphatic epoxy resins or cycloaliphatic epoxy resins. Cycloaliphatics can be produced by the peracetic epoxidation of cyclic olefins and by the condensation of an acid such as tetrahydrophthalic acid with epichlorohydrin, followed by dehydrohalogenation. The aliphatic epoxy resins can be prepared by reacting hydroxy-containing aliphatic and cycloaliphatic compounds such as aliphatic diols and triols. For example, ethylene glycol or glycerol can be reacted with a halogen-substituted aliphatic epoxide such as epichlorohydrin (and others mentioned above) to form liquid epoxy resins characterized by viscosities which are lower than epoxy resins derived from aromatic hydroxy compounds. When cured, such aliphatic epoxy resins are not as brittle as the aromatic epoxy resins, and in many instances, exhibit elastomeric properties. Aliphatic epoxy resins are available commercially from a variety of sources including, for example, Shell Chemical Company and Reichhold Chemicals Inc. Specific examples include Epon 562 from Shell Chemical Company having a viscosity of 90 to 150 centipoises at about 23°C, an epoxide equivalent of 140 to 165, and a hydroxyl equivalent weight of about 65.

Numerous oxidizing agents are suitable for use in the present invention and include peroxides, hydroperoxides, hydroxy hydroperoxides, chlorates, perchlorates, chlorites, hydrochlorides, perbenzoates, permanganates, etc. Preferably, however, the oxidizing agent is a peroxide, hydroperoxide or a mixture of one or more peroxides or hydroperoxides with hydrogen peroxide. The organic peroxides may be aromatic or alkyl peroxides. Examples of useful diacyl peroxides include benzoyl peroxide, lauroyl peroxide and decanoyl peroxide. Ketone peroxides are particularly useful and these include methyl ethyl ketone peroxide, isobutyl methyl ketone peroxide, and 2,4-pentane dione peroxide. Examples of peroxy ester oxidizing agents include t-butyl peroctoate, t-butyl peracetate, t-butyl perbenzoate and t-amyl peroctoate.

Examples of alkyl peroxides include dicumyl peroxide and di-t-butyl peroxide. Examples of hydroperoxides useful in the invention include t-butyl hydroperoxide, cumene hydroperoxide, paramenthane hydroperoxide, etc. The compositions of the invention will usually contain from about 15 to about 40% or up to 50% by weight of the oxidizing agent based on the weight of the epoxy resin.

Using the acid curable epoxy resins of the invention, a nearly instantaneous cure is initiated resulting in a resin having good strength and surface hardness which is usually capable of being handled immediately. Blocks with a diameter of about 100 cm can be cured within seconds. This result is surprising since it is known that even concentrated sulphuric acid gives only a slow curing of epoxy resins and since the epoxy modified furane resins typically cure much slower than the unmodified furane resins. Generally, an epoxy resin-peroxide mixture is contacted with the sulphur dioxide gas for a period of from a fraction of a second to about five minutes at a temperature of from ambient temperature (say 15°C) to about 150°C. In some instances, the sulphur dioxide can be suspended in known manner in a stream of a carrier gas, for example air or nitrogen. The amount of sulphur dioxide required to cure the epoxy resin-peroxide mixture is a catalytic amount, and generally as little as about 0.5% sulphur dioxide based on the weight of the carrier gas is adequate to cause polymerization and curing. As mentioned, however, it is also feasible to contact the epoxy-peroxide mixture directly from sulphur dioxide in the absence of any carrier gas.

The acid curable epoxy resins of the present invention can be modified by the addition of various monomers, polymers and other compounds which effect desirable properties in the cured epoxy system. For example the thermal stability of the epoxy system can be increased by mixing various monomers with the epoxy resin/oxidizing agent mixture. These mixtures can then be cured with sulphur dioxide in the manner described above.

Examples of materials which can be blended with the acid-curable epoxy resins in accordance with this invention include acrylic or vinyl monomers, for example a monofunctional, difunctional, trifunctional or tetrafunctional acrylate, furfuryl alcohol, a formaldehyde based phenolic, urea or melamine resin, urethane resin, or mixtures thereof. The exact mechanism by which such materials modify the properties of the acid curable epoxy resins is not known at this time. It has been found that up to about 50% by weight of the materials can be mixed with the epoxy resin to form modified epoxy resin systems in accordance with the invention. Acrylic compounds are useful as modifiers for the epoxy systems, and specific examples include trimethylol propane triacrylate and triethylene glycol diacrylate. Examples of the formaldehyde-based thermosetting resins useful as modifiers include phenol-formaldehyde resin or urea formaldehyde resin. Resorcinol is also a particularly useful modifying agent.

Preferred modifiers or cross-linking agents which give excellent properties with the epoxy resinoxidizing agent mixture are epoxy reactive diluents and monomeric polyfunctional glycidyl compounds such as diglycidyl or triglycidyl ethers of triols.

The properties of the compositions of this invention can be further modified, if desired, having regard to their physical properties. For example, diluents, extenders or thinners can be added, with methanol being a typical additive of this kind.

In one preferred embodiment of the invention, curable epoxy resin compositions are prepared comprising a mixture of

(a) a major amount of a solid particulate material, and
(b) a minor amount of

(i) an acid curable epoxy resin and
(ii) an oxidizing agent capable of reacting with sulphur dioxide to form a catalyst for curing said epoxy resin.

Generally, such curable epoxy resin compositions will comprise from about 0.2 to about 15% by weight of the epoxy resin based on the weight of the particulate material, and the oxidizing agent will comprise from about 10 to about 40% by weight based on the weight of said resin. The acid-curable epoxy resin utilized in the compositions may be modified epoxy resins containing up to about 50% by weight of an acrylic or vinyl monomer, furfuryl alcohol, resorcinol, a formaldehyde based phenolic, urea or melamine resin, urethane resin or mixtures thereof as described above.

A variety of solid particulate materials can be utilized in the epoxy resin compositions of this embodiment. The choice of particulate material will depend, in part, on the intended use of the filled epoxy resin. The particulate materials which can be used as fillers in the compositions of the invention include all materials containing a high proportion of silica, such as siliceous sand; refractory materials; granular metal oxides such as zirconium oxides; and abrasive products such as carborundum, emery, quartz, garnet, aluminium oxide, silicon carbide; etc.

Other materials may be included in the compositions of the invention to provide additional desirable results. For example, coupling agents such as silanes and titanates can be included for improving the bond between the epoxy resin and the particulate materials and to improve the ability of the composite to retain its original properties after prolonged aging and/or exposure to moisture. Chemically, such coupling agents are hybrid materials that possess the functionality of an organic reactive group at one end of the molecule and the partly inorganic alkoxysilane or alkoxytitanate functionality at the other. Typical organofunctional groups found in the silanes include vinyl, chloroalkyl, epoxy, methacrylate, amine and

styrylamine groups. The silane coupling agents known in the art are particularly useful in the filled compositions of the invention.

The mixtures comprising the solid particulate material, epoxy resin, oxidizing agent and other optional additives such as silanes can be formed into various shapes utilizing moulds. While the mixture is in the mould, it is treated with sulphur dioxide gas to effect a nearly instantaneous cure as described above.

The introduction of gas into the shaped composition can be carried out by known processes in various ways depending on whether a mould or a core is being produced. In the case of a core, for example, the composition can be shaped in as mould which possesses orifices equipped with filters connected to the outside, and through which the gas is introduced directly, under pressure, into the composition. During the production of a mould from the composition, the reverse procedure can be followed, by clamping the mixture of sand and resin on a pattern and by introducing the gas via a plurality of channels machined in this pattern.

After manual, mechanical, hydraulic or pneumatic clamping of the composition consisting of granular filler, epoxy resin and oxidizing agent, the gas can be injected at ambient temperature and at a pressure which can vary depending on the dimensions of the object to be manufactured. The pressure must be sufficient for the gas to be dispersed uniformly throughout the entire bulk of the composition and to escape to the outside of the mould. The pressures which are usually employed are over-pressures between about 0.3 and 5 atmospheres. The shaped articles prepared in this manner exhibit good strength and surface hardness and can be handled immediately.

In this manner, foundry cores and moulds can be prepared readily, and the method offers several advantages over processes using condensation type curing resins. One important advantage is the freedom from formaldehyde in the system. Another important advantage of the compositions of the invention is that there is a reduced amount of water in the system. A further advantage of the epoxy resin compositions of the invention is the reduction in migration of reaction by-products. Further advantages are observed in the improved performance with high acid demand lake sands and improved bench life. A still further advantage of the use of the epoxy resin systems of the invention is a substantial saving in cost, especially on high acid demand sands where less resin is required.

The following examples illustrate the compositions and processes of the invention. Unless otherwise indicated all parts and percentages are by weight.

Example 1

A mixture of 100 parts of Epon 828 resin, a bisphenol-A type epoxy resin, and 30 parts of cumene hydroperoxide is prepared by mulling for about 5 minutes. The mixture is applied as a film and heated with sulphur dioxide for about 0.5 second at ambient temperature. The initial curing of the resin results in a slightly flexible epoxy film.

Example 2

A Wedron 5040 sand is mixed with 1.0% (based on the sand) of Epon 828 resin and mulled for 3 minutes. Epon 828 is a bisphenol-A type epoxy resin. Cumene hydroperoxide, 30% (based on the resin), is added, and the mixture mulled for an additional 3 minutes. The sand-resin-peroxide mix is then rammed or blown into a mould (a standard dogbone shaped specimen mould) and treated with sulphur dioxide for about 0.5 second at room temperature, followed by a 15 second air purge. Gassing times of about 0.3 seconds to about 5 minutes and temperatures from room temperature to about 150°C can be used.

The initial cure of the epoxy system is characterized by a tough, slightly flexible cure. The flexibility is an advantage in many applications, resulting in reduced core breakage upon removal of the article from the mould. In some cases, however, a rigid initial cure is preferred to prevent deformation of thin, intricate designs: modification of the epoxy resin with 5 to 15% phenol-formaldehyde resin results in a more rigid initial cure and higher initial tensile strength.

The product obtained after 20 seconds, as described above, is capable of being handled immediately. This product has equal or better hardness and tensile strength than a like product made using condensation type resins.

This procedure also may be repeated using bisphenol-F type epoxy resins and epoxy novolac resins.

Example 3

The procedure of Example 2 is repeated, except that the Epon 828 resin is modified with 15% furfuryl alcohol.

The product is similar to that of Example 2.

This procedure may be repeated using bisphenol-F type epoxy resins and epoxy novolac resins.

Example 4

The procedure of Example 3 is repeated, except that after the 15 second air purge, the specimen or biscuit is then heated for a further period of 5 minutes at 110°C. After cooling to room temperature, the biscuit has a tensile strength of 575 psi (3964 $KN/m^2$) as compared to 290 psi (1999 $KN/m^2$) without baking. This procedure may be repeated using bisphenol-F type epoxy resins and epoxy novolac resins.

Example 5

The procedure of Example 2 is repeated except that the composition of the modified Epon 828 resin is: 78.8% Epon 828, 10% phenolic resin, 0.2% A-187 silane from Dow Corning, 10% methanol to which there is added 20% trimethylolpropane triacrylate. The phenolic resin used in this and the following examples is a resole with a 1.5:1 formaldehyde to phenol ratio reacted under basic conditions. After gassing a 20 second air purge was used.

The product obtained after 20 seconds is capable of being handled immediately. The product has an immediate tensile strength (after 20 seconds) of 156 psi (1056 $KN/m^2$) as compared to 130 psi (896 $KN/m^2$) for the unmodified product, and has equal or better hardness and tensile strength than a like product made using condensation type resins.

The procedure may be repeated using bisphenol-F type epoxy resins and epoxy novolac resins.

Example 6

The procedure of Example 5 is repeated, except that the composition of the modified Epon 828 resin is: 78.8% Epon 828, 10% phenolic resin, 0.2% A-187 silane, 10% methanol to which there was added 20% furfuryl methacrylate.

The product is similar to that of Example 5.

Example 7

The procedure of Example 5 is repeated except that the composition of the modified Epon 828 resin is: 78.8% Epon 828, 10% phenolic resin, 0.2% A-187 silane, 10% methanol to which there was added 20% furfuryl glycidyl ether prepared by reacting epichlorohydrin with furfuryl alcohol using a base such as sodium hydroxide as catalyst and for dehydrohalogenation.

The product is similar to that of Example 5.

The procedure may be repeated using bisphenol-F type epoxy resins and epoxy novolac resins.

Examples 8 and 9

In a series of experiments, a Manley 1-L sand (Example 8) or a 504 Waldron sand (Example 9) is mixed with 1.0% (based on the sand) of modified Epon 828 resin and mulled for three minutes. The composition used is Composition B, 81.8% Epon 828, 5% resorcinol resin, 3% triphenyl phosphite, 0.2% A-187 silane, 10% methanol. Cumene hydroperoxide 30% (based on the resin), is added and the mixture mulled for an additional three minutes. The sand-resin-peroxide mix is held for periods of 5 minutes, 65 hours, and 6 days, respectively, rammed or blown into a mould (a standard dogbone shaped specimen mould) and gassed with sulphur dioxide for about 0.5 second at room temperature, followed by a 15 second air purge. Gassing times of about 0.3 seconds to about 5 minutes and temperatures from room temperature to about 150°C can be used.

The tensile and hardness data for the products are taken as follows, where the hardness data is expressed on a scale of 0 to 100, with 100 being hardest:

| | Example 8 | | | Example 9 | | |
|---|---|---|---|---|---|---|
| Age of mix | 5 mins | 65 hrs | 6 days | 5 mins | 65 hrs | 6 days |
| 20 sec | | | | | | |
| tensile psi | 108 | 80 | 80 | 110 | 108 | 109 |
| $KN/m^2$ | 744 | 551 | 551 | 758 | 744 | 751 |
| core hardness | 88 | 79 | 77 | 93 | 90 | 84 |
| 30 min | | | | | | |
| tensile psi | 279 | 200 | 190 | 280 | 240 | 255 |
| $KN/m^2$ | 1923 | 1379 | 1309 | 1930 | 1655 | 1758 |
| core hardness | 91 | 88 | 85 | 99 | 97 | 88 |
| 24 hrs | | | | | | |
| tensile psi | 280 | 260 | 240 | 278 | 276 | 280 |
| $KN/m^2$ | 1930 | 1792 | 1655 | 1917 | 1903 | 1930 |
| core hardness | 92 | 90 | 86 | 98 | 96 | 88 |

The procedures may be repeated using Bisphenol-F type epoxy resins and epoxy novolac resins.

Examples 10 to 13

A series of experiments is carried out evaluating the products obtained by the binding of various sands with various resins at various levels using various peroxides.

The sand is mixed with resin and mulled for three minutes. The peroxide, 30% (based on the resin), is added and the mixture mulled for an additional three minutes before moulding. The sand-resin-peroxide mix is then rammed or blown into a mould (a standard dogbone shaped specimen mould) and gassed with sulphur dioxide for about 0.5 second at room temperature, followed by a 15 second air purge. Gassing times of about 0.3 second to about 5 minutes and temperatures from room temperature to about 150°C can be used.

The epoxy resin composition is as shown in the following table:

| Composition | A | B | C | D | E |
|---|---|---|---|---|---|
| Epon 828 | 79.8 | 81.8 | 79.8 | 74.8 | 79.8 |
| furfuryl alcohol | 15 | | | 15 | |
| resorcinol resin | 5 | 5 | 5 | | |
| phenolic resin | | | | | 10 |
| triphenyl phosphite | | 3 | | | |
| A-187 silane | 0.2 | 0.2 | 0.2 | 0.2 | 0.2 |
| methanol | | 10 | 15 | 10 | 10 |

The furan resin F is a furfuryl alcohol-formaldehyde copolymer reacted under acidic conditions. The formaldehyde to furfuryl alcohol ratio is 1:1.

The tensile and hardness data for the products using the different resins and peroxides are as follows:

| Example | 10 | 10 | 10 | 10 | 11 | 11 | 11 |
|---|---|---|---|---|---|---|---|
| resin | B | F | F | F | A | B | B |
| % (BOS***) | 1.0 | 1.0 | 1.25 | 1.5 | 1.0 | 1.0 | 0.7 |
| peroxide | CH** | CH | MEKP* | MEKP | CH | CH | CH |
| % (BOR****) | 30 | 30 | 45 | 45 | 30 | 30 | 30 |
| sand | ——Manley 1-L—— | | | | ——5040 Wedron—— | | |
| temp °F | 77 | 77 | 76 | 76 | 76 | 76 | 77 |
| °C | 25 | 25 | 24 | 24 | 24 | 24 | 25 |
| 20 sec | | | | | | | |
| tensile psi | 108 | 74 | 88 | 120 | 70 | 110 | 90 |
| KN/m² | 745 | 510 | 607 | 827 | 483 | 758 | 620 |
| core hardness | 88 | 45 | 69 | 82 | 89 | 93 | 78 |
| 30 min | | | | | | | |
| tensile psi | 279 | 88 | 123 | 196 | 186 | 280 | 180 |
| KN/m² | 1923 | 606 | 848 | 1351 | 1282 | 1930 | 1241 |
| core hardness | 91 | 46 | 74 | 83 | 92 | 99 | 85 |
| 24 hrs | | | | | | | |
| tensile psi | 274 | 92 | 135 | 171 | 268 | 279 | 220 |
| KN/m² | 1889 | 634 | 931 | 1179 | 1848 | 1923 | 1517 |
| core hardness | 91 | 35 | 81 | 86 | 96 | 99 | 96 |

*MEKP=methylethyl ketone peroxide; **CH=cumene hydroperoxide;
***BOS=based on sand; ****BOR=based on resin

The procedure may be repeated using Bisphenol-F type epoxy resins and epoxy novolac resins.

Example 12

In this series of experiments conducted as in Example 10, a Manley 1-L lake sand is used with different epoxy resin compositions at the same level and for two different peroxides.

The tensile and hardness data for the products using the different resins and the different peroxides are as follows:

| Example | 12 | 12 | 12 | 13 | 13 | 13 |
|---|---|---|---|---|---|---|
| resin | B | C | B | B | D | E |
| %(BOS) | 1.0 | 1.0 | 1.0 | 0.8 | 1.0 | 1.0 |
| peroxide $H_2O_2$ | 60% | CH | MEKP | CH | CH | CH |
| %(BOR) | 15 | 30 | 30 | 30 | 30 | 30 |
| sand | —5040 Wedron— | | | Florida Zircon | 5040 Wedron | Manley 1-L |
| temp °F | 76 | 76 | 77 | 75 | 77 | 78 |
| °C | 24 | 24 | 25 | 24 | 25 | 26 |
| 20 sec | | | | | | |
| tensile psi | 50 | 116 | 70 | 112 | 98 | 136 |
| $KN/m^2$ | 345 | 799 | 483 | 772 | 676 | 938 |
| core hardness | 10 | 81 | 65 | 99 | 86 | 88 |
| 30 min | | | | | | |
| tensile psi | 50 | 200 | 86 | 260 | 140 | 278 |
| $KN/m^2$ | 345 | 1379 | 593 | 1792 | 965 | 1917 |
| core hardness | 12 | 82 | 78 | 98 | 85 | 91 |
| 24 hrs | | | | | | |
| tensile psi | 40 | 270 | 148 | 390 | 230 | 296 |
| $KN/m^2$ | 276 | 1861 | 1020 | 2689 | 1586 | 2041 |
| core hardness | 10 | 86 | 95 | 100 | 86 | 89 |

The procedure of Example 12 may be repeated using Bisphenol-F type epoxy resins and epoxy novolac resins. The procedure of Example 13 may be repeated using Bisphenol-F type epoxy resins, epoxy novolac resins, furfuryl glycidyl ether, etc.

Example 14

The procedure of Example 2 is repeated using Epon 828 resin modified with 20% of trimethylolpropane triacrylate (TMPTA) blended with 10% of methanol and 0.2% A-187 silane. The tensile and hardness data for the specimens are taken after the following periods of time. For comparison, the above procedure is repeated using Epon 828 without the TMPTA but with 30% of the peroxide.

| | Epon 828 | TMPTA Modified Epon 828 |
|---|---|---|
| 20 sec | | |
| tensile psi | 136 | 233 |
| $KN/m^2$ | 938 | 1606 |
| core hardness | 88 | 91 |
| 30 min | | |
| tensile psi | 270 | 320 |
| $KN/m^2$ | 1861 | 2206 |
| core hardness | 90 | 90 |
| 24 hrs | | |
| tensile psi | 269 | 334 |
| $KN/m^2$ | 1855 | 2303 |
| core hardness | 89 | 88 |

As can be seen above, the modification of the bisphenol-A epoxy resin formulation with 20% of the triacrylate increases the tensile strength by 75% in the first 20 seconds after gassing. In addition the rigidity of the article is greatly increased thereby permitting fabrication of thin sectioned complex cores such as water jacket and cylinder head cores. Another advantage is that the peroxide concentration needed for curing is reduced.

Example 15

A Wedron sand is mixed with 1.0% (based on the sand) of a mixture comprising 75 parts of an epoxy-novolac resin (EPN-1139 from Ciba-Geigy) and 25 parts of Epon 828 blended with 10% methanol and 0.2% A-187 silane. Specimens are prepared as described in Example 14 using this formulation and a similar formulation except that the peroxide is reduced to 20% and 7% of TMPTA is added to the formulation. For comparison specimens of unmodified Epon 828 also are prepared. The tensile and hardness data are as follows.

| | Epon 828 | Epon 828<br>EPN 1139 | Epon 828<br>EPN 1139<br>TMPTA |
|---|---|---|---|
| 20 sec | | | |
| tensile psi | 136 | 224 | 214 |
| $KN/m^2$ | 938 | 1544 | 1475 |
| core hardness | 88 | 82 | 92 |
| 5 min | | | |
| tensile psi | — | 294 | 380 |
| $KN/m^2$ | | 2027 | 2620 |
| core hardness | — | 82 | 96 |
| 30 min | | | |
| tensile psi | 270 | 350 | 428 |
| $KN/m^2$ | 1861 | 2413 | 2951 |
| core hardness | 90 | 82 | 96 |
| 24 hrs | | | |
| tensile psi | 269 | 338 | 495 |
| $KN/m^2$ | 1854 | 2330 | 3413 |
| core hardness | 89 | 85 | 92 |

The above results demonstrate that the blend of epoxy and epoxy novolac produces stronger cores than the epoxy alone, that the blend produces stronger cores than the epoxy novolac alone, and that the improved results are obtained when the epoxy resin blend is modified with the TMPTA even when the amount of peroxide is reduced.

Example 16

A Wedron sand is mixed with 1.0% (based on the sand) of either an epoxy novolac resin (EPN-1139) containing only 10% methanol and 0.2% A-187 silane or a blend of 44.9% EPN-1139 resin with 44.9% Epon 828 and 0.2% A-187 silane and 10% methanol. Cumene hydroperoxide (30%) is mulled into the resin formulations and specimen shapes are prepared as in Example 14. The tensile and core hardness data are as follows:

| | EPN-1139 | EPN-1139 Epon 828 |
|---|---|---|
| 20 sec | | |
| tensile psi | 160 | 162 |
| KN/$m^2$ | 1103 | 1117 |
| core hardness | 85 | 88 |
| 30 min | | |
| tensile psi | 182 | 334 |
| KN/$m^2$ | 1255 | 2303 |
| core hardness | 84 | 92 |
| 48 hrs | | |
| tensile psi | 210 | 372 |
| KN/$m^2$ | 1448 | 2565 |
| core hardness | 80 | 93 |

The above data shows the superior strengths obtained when the combination of resins is used in the compositions of this invention.

**Claims for the Contracting States: BE, CH, DE, FR, GB, IT, LI, LU, NL, SE**

1. A curable epoxy resin composition consisting essentially of a mixture of an acid curable epoxy resin which is a mixed aliphatic-aromatic or an exclusively non-aromatic epoxy resin, and 15 to 50 per cent by weight, based on the weight of the epoxy resin, of an oxidizing agent capable of reacting with sulphur dioxide to form a catalyst for curing the epoxy resin.

2. A curable epoxy resin composition consisting essentially of a mixture of an acid curable epoxy resin which is a mixed aliphatic-aromatic or an exclusively non-aromatic epoxy resin, and which is modified by admixture in an amount of up to 50% weight of the modified resin of one of more acrylic monomers, vinyl monomers, furfuryl alcohol, resorcinol, monomeric glycidyl compounds, formaldehyde-based phenolic resins, urea resins or melamine resins, urethane resins and diluents, and 15 to 50 per cent by weight, based on the weight of the epoxy resin, of an oxidizing agent capable of reacting with sulphur dioxide to form a catalyst for curing the epoxy resin.

3. A composition according to claim 1 or 2 wherein the composition comprises from 15 to 40 per cent by weight of the oxidizing agent, based on the weight of the epoxy resin.

4. A composition according to claim 1, 2 or 3, wherein the oxidizing agent comprises a peroxide or hydroperoxide.

5. A composition according to claim 4, wherein the oxidizing agent is methyl ethyl ketone peroxide, cumene hydroperoxide, paramenthane hydroperoxide, t-butyl hydroperoxide, diisopropyl benzene hydroperoxide, an admixture thereof or an admixture thereof with hydrogen peroxide.

6. A composition according to any preceding claim, wherein the epoxy resin is a bisphenol A-type epoxy resin.

7. A composition according to any preceding claim, wherein the composition further comprises a major amount of a solid particulate material.

8. A composition according to claim 7, which comprises from 0.2 to 15 per cent by weight of the epoxy resin based on the weight of the particulate material.

9. A composition according to claim 7 or 8, wherein the solid particulate material comprises sand.

10. A composition according to claim 7, 8 or 9, wherein the solid particulate material comprises inorganic abrasive particles.

11. A method of curing epoxy resins which comprises preparing a composition as defined in any preceding claim, and treating the composition with gaseous sulphur dioxide to effect a cure of the epoxy resin.

12. A method according to claim 11, wherein the composition is contacted with sulphur dioxide for a period of from a fraction of a second to 5 minutes at a temperature of from ambient temperature to 150°C.

13. A method according to claim 11 or 12 when used to form shaped, filled bodies, wherein the composition is formed into the desired shape before the cure.

14. A method according to any of claims 11 to 13, wherein the cured, product is baked at an elevated temperature for a period of from 1 to 10 minutes.

15. A method according to any of claims 11 to 14, wherein the composition is purged with air or an inert gas after completion of contact with the sulphur dioxide.

16. A method according to any of claims 11 to 15, when used to form sand cores or moulds, wherein the composition is formed into the shape of a core or mould before the cure.

**Claims for the Contracting State: AT**

1. A method of curing epoxy resins which comprises preparing a curable epoxy resin composition consisting essentially of a mixture of an acid curable epoxy resin which is a mixed aliphatic-aromatic or an exclusively non-aromatic epoxy resin, and 15 to 50 per cent by weight, based on the weight of the epoxy resin, of an oxidizing agent capable of reacting with sulphur dioxide to form a catalyst for curing the epoxy resin; and treating the composition with gaseous sulphur dioxide to effect a cure of the epoxy resin.

2. A method of curing epoxy resins which comprises preparing a curable epoxy resin composition consisting essentially of a mixture of an acid curable epoxy resin which is a mixed aliphatic-aromatic or an exclusively non-aromatic epoxy resin, and which is modified by admixture in an amount of up to 50% weight of the modified resin of one of more acrylic monomers, vinyl monomers, furfuryl alcohol, resorcinol, monomeric glycidyl compounds, formaldehyde-based phenolic resins, urea resins or melamine resins, urethane resins and diluents, and 15 to 50 per cent by weight, based on the weight of the epoxy resin, of an oxidizing agent capable of reacting with sulphur dioxide to form a catalyst for curing the epoxy resin, and treating the composition with gaseous sulphur dioxide to effect a cure of the epoxy resin.

3. A method according to claim 1 or 2 wherein the composition comprises from 15 to 40 per cent by weight of the oxidizing agent, based on the weight of the epoxy resin.

4. A method according to claim 1, 2 or 3, wherein the oxidizing agent comprises a peroxide or hydroperoxide.

5. A method according to claim 4, wherein the oxidizing agent is methyl ethyl ketone peroxide, cumene hydroperoxide, paramenthane hydroperoxide, t-butyl hydroperoxide, diisopropyl benzene hydroperoxide, an admixture thereof or an admixture thereof with hydrogen peroxide.

6. A method according to any preceding claim, wherein the epoxy resin is a bisphenol A-type epoxy resin.

7. A method according to any preceding claim, wherein the composition further comprises a major amount of a solid particulate material.

8. A method according to claim 7, which comprises from 0.2 to 15 per cent by weight of the epoxy resin based on the weight of the particulate material.

9. A method according to claim 7 or 8, wherein the solid particulate material comprises sand.

10. A method according to claim 7, 8 or 9, wherein the solid particulate material comprises inorganic abrasive particles.

11. A method according to any preceding claim, wherein the composition is contacted with sulphur dioxide for a period of from a fraction of a second to 5 minutes at a temperature of from ambient temperature to 150°C.

12. A method according to any preceding claim, when used to form shaped, filled bodies, wherein the composition is formed into the desired shape before the cure.

13. A method according to any preceding claim, wherein the cured, product is baked at an elevated temperature for a period of from 1 to 10 minutes.

14. A method according to any preceding claim, wherein the composition is purged with air or an inert gas after completion of contact with the sulphur dioxide.

15. A method according to any preceding claim, when used to form sand cores or moulds, wherein the composition is formed into the shape of a core or mould before the cure.

16. A method of preparing a curable epoxy resin composition, the method consisting essentially of admixing an acid curable epoxy resin which is a mixed aliphatic-aromatic or an exclusively non-aromatic epoxy resin, and which is optionally modified by admixture in an amount of up to 50% by weight of the modified resin of one of more acrylic monomers, vinyl monomers, furfuryl alcohol, resorcinol, monomeric glycidyl compounds, formaldehyde-based phenolic resins, urea resins or melamine resins, urethane resins and diluents; with 15 to 50 percent by weight, based on the weight of the epoxy resin, of an oxidizing agent capable of reacting with sulphur dioxide to form a catalyst for curing the epoxy resin.

**Patentansprüche für die Vertragsstaaten: BE, CH, DE, FR, GD, IT, LI, LU, NL, SE**

1. Härtbare Epoxidharz-Zusammensetzung, die im wesentlichen aus einem Gemisch eines säurehärtbaren Epoxidharzes, das ein gemischt-aliphatisch-aromatisches oder ein ausschliesslich nicht-aromatisches Epoxidharz darstellt, und 15 bis 50 Gew.-%, bezogen auf das Gewicht des Epoxidharzes, eines Oxidationsmittels, welches in der Lage ist, mit Schwefeldioxid unter Bildung eines Katalysators zum Härten des Epoxidharzes zu reagieren, besteht.

2. Härtbare Epoxidharz-Zusammensetzung, welche im wesentlichen aus einem Gemisch eines säure-härtbaren Epoxidharzes, welches ein gemischt-aliphatisch-aromatisches oder ein ausschliesslich nicht-aromatisches Epoxidharz darstellt, und welches modifiziert ist durch Zugabe von einem oder mehreren Acrylmonomeren, Vinylmonomeren, Furfurylalkohol, Resorcin, monomeren Glycidylverbindungen, Phenolharzen auf Formaldehydbasis, Harnstoffharzen oder Melaminharzen, Urethanharzen und Streckmitteln, in einer Menge bis zu 50 Gew.-% des modifizierten Harzes, und 15 bis 50 Gew.-%, bezogen auf das Gewicht des Epoxidharzes, eines Oxidationsmittels, welches in der Lage ist, mit Schwefeldioxid unter Bildung eines Katalysators zum Härten des Epoxidharzes zu reagieren, besteht.

3. Zusammensetzung nach Anspruch 1 oder 2, worin die Zusammensetzung 15 bis 40 Gew.-% Oxidationsmittel, bezogen auf das Gewicht des Epoxidharzes, umfasst.

4. Zusammensetzung nach Anspruch 1, 2 oder 3, worin das Oxidationsmittel ein Peroxid oder Hydroperoxid umfasst.

5. Zusammensetzung nach Anspruch 4, worin das Oxidationsmittel Methylethylketonperoxid, Cumenhydroperoxid, Paramenthanhydroperoxid, t-Butylhydroperoxid, Diisopropylbenzolhydroperoxid, ein Gemisch derselben oder ein Gemisch mit Wasserstoffperoxid darstellt.

6. Zusammensetzung nach einem oder mehreren der vorhergehenden Ansprüche, worin das Epoxidharz ein Epoxidharz vom Bisphenol-A-Typ darstellt.

7. Zusammensetzung nach einem oder mehreren der vorhergehenden Ansprüche, worin die Zusammensetzung im weiteren eine grössere Menge eines festen, teilchenförmigen Materials umfasst.

8. Zusammensetzung nach Anspruch 7, dadurch gekennzeichnet, dass sie von 0,2 bis 15 Gew.-% Epoxidharz, bezogen auf das Gewicht des teilchenförmigen Materials, umfasst.

9. Zusammensetzung nach Anspruch 7 oder 8, dadurch gekennzeichnet, dass das feste, teilchenförmige Material Sand umfasst.

10. Zusammensetzung nach Anspruch 7, 8 oder 9, dadurch gekennzeichnet, dass das feste, teilchenförmige Material anorganische Schleifpartikel umfasst.

11. Verfahren zum Härten von Epoxidharzen, gekennzeichnet durch Herstellen einer Zusammensetzung, wie sie in einem oder mehreren der vorhergehenden Ansprüche definiert ist, und Behandeln der Zusammensetzung mit gasförmigem Schwefeldioxid, um dieselbe zu härten.

12. Verfahren nach Anspruch 1, dadurch gekennzeichnet, dass die Zusammensetzung mit dem Schwefeldioxid für eine Zeitdauer, die von einem Bruchteil einer Sekunde bis zu 5 Minuten geht, bei einer Temperatur von Raumtemperatur bis 150°C in Kontakt gebracht wird.

13. Verfahren nach Anspruch 11 oder 12, zum Herstellen von Formkörpern und Füllkörpern, wobei die Zusammensetzung vor dem Härten in die gewünschte Form gebracht wird.

14. Verfahren nach einem oder mehreren der Ansprüche 11 bis 13, dadurch gekennzeichnet, dass das gehärtete Produkt bei erhöhter Temperatur für eine Zeitdauer von 1 bis 10 Minuten wärmebehandelt wird.

15. Verfahren nach einem oder mehreren der Ansprüche 11 bis 14, dadurch gekennzeichnet, dass die Zusammensetzung nach dem Inkontaktbringen mit Schwefeldioxid mit Luft oder Inertgas gespült wird.

16. Verfahren nach einem oder mehreren der Ansprüche 11 bis 15 zum Herstellen von Formsandkernen und Giessformen, dadurch gekennzeichnet, dass die Zusammensetzung vor dem Härten zu einem Kern oder einer Giessform geformt wird.

**Patentansprüche für der Vertragsstaat: AT**

1. Verfahren zum Härten von Epoxidharzen, dadurch gekennzeichnet, dass man eine härtbare Epoxidharzzusammensetzung herstellt, die im wesentlichen aus einem Gemisch eines säure-härtbaren Epoxidharzes, das ein gemischt-aliphatisch-aromatisches oder ein ausschliesslich nicht-aromatisches Epoxidharz darstellt, und 15 bis 50 Gew.-%, bezogen auf das Gewicht des Epoxidharzes, eines Oxidationsmittels, welches in der Lage ist, mit Schwefeldioxid unter Bildung eines Katalysators zum Härten des Epoxidharzes zu reagieren, besteht, und die Zusammensetzung mit gasförmigem Schwefeldioxid zum Härten des Epoxidharzes behandelt.

2. Verfahren zum Härten von Epoxidharzen, dadurch gekennzeichnet, dass man eine härtbare Epoxidharzzusammensetzung herstellt, die im wesentlichen aus einem Gemisch eines säure-härtbaren Epoxidharzes, welches ein gemischt-aliphatisch-aromatisches oder ein ausschliesslich nicht-aromatisches Epoxidharz darstellt, und welches modifiziert ist durch Zugabe von einem oder mehreren Acrylmonomeren, Vinylmonomeren, Furfurylalkohol, Resorcin, monomeren Glycidylverbindungen, Phenolharzen auf Formaldehydbasis, Harnstoffharzen oder Melaminharzen, Urethanharzen und Streckmitteln, in einer Menge bis zu 50 Gew.-% des modifizierten Harzes, und 15 bis 50 Gew.-%, bezogen auf das Gewicht des Epoxidharzes, eines Oxidationsmittels, welches in der Lage ist, mit Schwefeldioxid unter Bildung eines Katalysators zum Härten des Epoxidharzes zu reagieren, besteht, und die Zusammensetzung mit gasförmigem Schwefeldioxid zum Härten des Epoxidharzes behandelt.

3. Verfahren nach Anspruch 1 oder 2, dadurch gekennzeichnet, dass die Zusammensetzung 15 bis 40 Gew.-% Oxidationsmittel, beozgen auf das Gewicht des Epoxidharzes, umfasst.

4. Verfahren nach Anspruch 1, 2 oder 3, dadurch gekennzeichnet, dass das Oxidationsmittel ein Peroxid oder Hydroperoxid umfasst.

5. Verfahren nach Anspruch 4, dadurch gekennzeichnet, dass das Oxidationsmittel Methylethylketonperoxid, Cumenhydroperoxid, Paramenthanhydroperoxid, t-Butylhydroperoxid, Diisopropylbenzolhydroperoxid, ein Gemisch derselben oder ein Gemisch mit Wasserstoffperoxid darstellt.

6. Verfahren nach einem oder mehreren der vorhergehenden Ansprüche, dadurch gekennzeichnet, dass das Epoxidharz ein Epoxidharz vom Bisphenol-A-Typ darstellt.

7. Verfahren nach einem oder mehreren der vorhergehenden Ansprüche, dadurch gekennzeichnet, dass die Zusammensetzung im weiteren eine grössere Menge eines festen, teilchenförmigen Materials umfasst.

8. Verfahren nach einem oder mehreren der vorhergehenden Ansprüche, dadurch gekennzeichnet,

dass das Epoxidharz von 0,2 bis 15 Gew.-%, bezogen auf das Gewicht des teilchenförmige Materials, vorliegt.

9. Verfahren nach Anspruch 7 oder 8, dadurch gekennzeichnet, dass das feste, teilchenförmige Material Sand umfasst.

10. Verfahren nach Anspruch 7, 8 oder 9, dadurch gekennzeichnet, dass das feste, teilchenförmige Material anorganische Schleifpartikel umfasst.

11. Verfahren nach einem oder mehreren der vorangehenden Ansprüche, dadurch gekennzeichnet, dass die Zusammensetzung mit dem Schwefeldioxid für eine Zeitdauer, die von einem Bruchteil einer Sekunde bis zu 5 Minuten geht, bei einer Temperatur von Raumtemperatur bis 150°C in Kontakt gebracht wird.

12. Verfahren nach einem oder mehreren der vorangehenden Ansprüche, zum Herstellen von Formkörpern und Füllkörpern, wobei die Zusammensetzung vor dem Härten in die gewünschte Form gebracht wird.

13. Verfahren nach einem oder mehreren der vorangehenden Ansprüche, dadurch gekennzeichnet, dass das gehärtete Produkt bei erhöhter Temperatur für eine Zeitdauer von 1 bis 10 Minuten wärmebehandelt wird.

14. Verfahren nach einem oder mehreren der vorangehenden Ansprüche, dadurch gekennzeichnet, dass die Zusammensetzung nach dem Inkontaktbringen mit Schwefeldioxid mit Luft oder Inertgas gespült wird.

15. Verfahren nach einem oder mehreren der vorangehenden Ansprüche, zum Herstellen von Formsandkernen und Giessformen, dadurch gekennzeichnet, dass die Zusammensetzung vor dem Härten zu einem Kern oder einer Giessform geformt wird.

16. Verfahren zum Herstellen einer härtbaren Epoxidharzzusammensetzung, wobei das Verfahren im wesentlichen besteht aus dem Vermischen eines säure-härtbaren Epoxidharzes, welches ein gemischt-aliphatisch-aromatisches oder ein ausschliesslich nicht-aromatisches Epoxidharz darstellt, und welches gegebenenfalls modifiziert ist durch Zugabe von einem oder mehreren Acrylmonomeren, Vinylmonomeren, Furfurylalkohol, Resorcin, monomeren Glycidyl-Verbindungen, Phenolharzen auf Formaldehydbasis, Harnstoffharzen oder Melaminharzen, Urethanharzen und Streckmitteln in einer Menge bis zu 50 Gew.-% des modifizierten Harzes, mit 15 bis 50 Gew.-%, bezogen auf das Gewicht des Epoxidharzes, eines Oxidationsmittels, das in der Lage ist, mit Schwefeldioxid unter Bildung eines Katalysators zum Härten des Epoxidharzes zu reagieren.

**Revendications pour les Etats Contractants: BE, CH, DE, FR, GB, IT, LI, LU, NL, SE**

1. Composition de résine époxydique durcissable consistant essentiellement en un mélange d'une résine époxydique durcissable par un acide qui est une résine époxydique aliphatique-aromatique mixte ou exclusivement non aromatique, et de 15 à 50% en poids, par rapport au poids de la résine époxydique, d'un agent oxydant capable de réagir avec le dioxyde de soufre pour former un catalyseur pour durcir la résine époxydique.

2. Composition de résine époxydique durcissable consistant essentiellement en un mélange d'une résine époxydique durcissable par un acide qui est une résine époxydique aliphatique-aromatique mixte ou exclusivement non aromatique, et qui est modifiée par mélange avec une quantité allant jusqu'à 50% en poids, de la résine modifiée, d'un ou plusieurs composés choisis parmi les monomères acryliques, les monomères vinyliques, l'alcool furfurylique, le résorcinol, les composés glycidyliques monomères, les résines phénoliques, les résines d'urée ou les résines de mélamine à base de formaldéhyde, les résine d'uréthanes et les diluants; et de 15 à 50% en poids, par rapport au poids de la résine époxydique, d'un agent oxydant capable de réagir avec le dioxyde de soufre pour former un catalyseur pour durcir la résine époxydique.

3. Composition selon la revendication 1 ou 2, dans laquelle la composition comprend de 15 à 40% en poids de l'agent oxydant, par rapport au poids de la résine époxydique.

4. Composition selon la revendication 1, 2 ou 3, dans laquelle l'agent oxydant comprend un peroxyde ou un hydroperoxyde.

5. Composition selon la revendication 4, dans laquelle l'agent oxydant est le peroxyde de méthyléthylcétone, l'hydroperoxyde de cumène, l'hydroperoxyde de paramenthane, l'hydroperoxyde de t-butyle, l'hydroperoxyde de diisopropylbenzène, un de leurs mélanges ou un de leurs mélanges avec le peroxyde d'hydrogène.

6. Composition selon l'une quelconque des revendications précédentes, dans laquelle la résine époxydique est une résine époxydique du type bisphénol A.

7. Composition selon l'une quelconque des revendications précédentes, dans laquelle la composition comprend en outre une quantité importante d'une matière particulaire solide.

8. Composition selon la revendication 7, qui comprend de 0,2 à 15% en poids de la résine époxydique, par rapport au poids de la matière particulaire.

9. Composition selon la revendication 7 ou 8, dans laquelle la matière particulaire solide comprend du sable.

10. Composition selon la revendication 7, 8 ou 9, dans laquelle le matière particulaire solide comprend des particules abrasives inorganiques.

11. Procédé pour le durcissement de résines époxydiques qui consiste à préparer une composition telle que définie dans l'une quelconque des revendications précédentes et à traiter la composition par le dioxyde de soufre gazeux pour effectuer le durcissement de la résine époxydique.

12. Procédé selon la revendication 11, dans lequel la composition est mise en contact avec le dioxyde de soufre pendant une durée d'une fraction de seconde à 5 minutes à une température comprise entre la température ambiante et 150°C.

13. Procédé selon la revendication 11 ou 12 lorsqu'on l'utilise pour fabriquer des articles moulés, renforcés, dans lequel la composition est mise dans la forme désirée avant le durcissement.

14. Procédé selon l'une quelconque des revendications 11 à 13, dans lequel le produit durci est cuit à une température élevée pendant une durée de 1 à 10 minutes.

15. Procédé selon l'une quelconque des revendications 11 à 14, dans lequel la composition est purgée par l'air ou un gaz inerte après la fin de la mise en contact avec le dioxyde de soufre.

16. Procédé selon l'une quelconque des revendications 11 à 15, lorsqu'on l'utilise pour former des noyaux ou moules en sable, dans lequel la composition est mise sous la forme d'un noyau ou moule avant le durcissement.

**Revendications pour l'Etat Contractant: AT**

1. Procédé de durcissement de résines époxydiques qui consiste à préparer une composition de résine époxydique durcissable consistant essentiellement en un mélange d'une résine époxydique durcissable par un acide qui est un résine époxydique aliphatique-aromatique mixte ou exclusivement non aromatique et de 15 à 50% en poids, par rapport au poids de la résine époxydique, d'un agent oxydant capable de réagir avec le dioxyde de soufre pour former un catalyseur pour durcir la résine époxydique; et à traiter la composition par le dioxyde de soufre gazeux pour effectuer le durcissement de la résine époxydique.

2. Procédé de durcissement de résines époxydiques qui consiste à préparer une composition de résine époxydique durcissable consistant essentiellement en un mélange d'une résine époxydique durcissable par un acide qui est une résine époxydique aliphatique-aromatique mixte ou exclusivement non aromatique, et qui est modifiée par mélange avec une quantité allant jusqu'à 50% en poids, de la résine modifiée, d'un ou plusieurs composés choisis parmi les monomères acryliques, les monomères vinyliques, l'alcool furfurylique, le résorcinol, les composés glycidyliques monomères, les résines phénoliques, les résines d'urée ou les résines de mélamine à base de formaldéhyde, les résines d'uréthannes et les diluants; et de 15 à 50% en poids, par rapport au poids de la résine époxydique, d'un agent oxydant capable de réagir avec le dioxyde de soufre pour former un catalyseur pour durcir la résine époxydique; et à traiter la composition par le dioxyde de soufre gazeux pour effectuer le durcissement de la résine époxydique.

3. Procédé selon la revendication 1 ou 2, dans lequel la composition comprend de 15 à 40% en poids de l'agent oxydant, par rapport au poids de la résine époxydique.

4. Procédé selon la revendication 1, 2 ou 3, dans lequel l'agent oxydant comprend un peroxyde ou un hydroperoxyde.

5. Procédé selon la revendication 4, dans lequel l'agent oxydant est le peroxyde de méthyléthylcétone, l'hydroperoxyde de cumène, l'hydroperoxyde de paramenthane, l'hydroperoxyde de t-butyle, l'hydroperoxyde de diisopropylbenzène, un de leurs mélanges ou un de leurs mélanges avec le peroxyde d'hydrogène.

6. Procédé selon l'une quelconque des revendications précédentes, dans lequel la résine époxydique est une résine époxydique du type bisphénol A.

7. Procédé selon l'une quelconque des revendications précédentes, dans lequel la composition comprend en outre une quantité importante d'une matière particulaire solide.

8. Procédé selon la revendication 7, qui comprend de 0,2 à 15% en poids de la résine époxydique, par rapport au poids de la matière particulaire.

9. Procédé selon la revendication 7, dans lequel la matière particulaire solide comprend du sable.

10. Procédé selon la revendication 7, 8 ou 9, dans lequel la matière particulaire solide comprend des particules abrasives inorganiques.

11. Procédé selon l'une quelconque des revendications précédentes, dans lequel la composition est mise en contact avec le dioxyde de soufre pendant une durée d'une fraction de seconde à 5 minutes à une température comprise entre la température ambiante et 150°C.

12. Procédé selon l'une quelconque des revendications précédentes, lorsqu'on l'utilise pour fabriquer des articles moulés, renforcés, dans lequel la composition est mise dans la forme désirée avant le durcissement.

13. Procédé selon l'une quelconque des revendications précédentes, dans lequel le produit durci est cuit à une température élevée pendant une durée de 1 à 30 minutes.

14. Procédé selon l'une quelconque des revendications précédentes, dans lequel la composition est purgée par l'air ou un gaz inerte après la fin de la mise en contact avec le dioxyde de soufre.

15. Procédé selon l'une quelconque des revendications précédentes, lorsqu'on l'utilise pour former des

noyaux ou moules en sable, dans lequel la composition est mise sous la forme d'un noyau ou moule avant le durcissement.

16. Procédé de préparation d'une composition de résine époxydique durcissable, le procédé consistant essentiellement à mélanger une résine époxydique durcissable par un acide qui est une résine époxydique-aliphatique aromatique mixte ou exclusivement non aromatique, et qui est facultativement modifiée par mélange avec une quantité allant jusqu'à 50% en poids, de la résine modifiée, d'un ou plusieurs composés choisis parmi les monomères acryliques, les monomères vinyliques, l'alcool furfurylique, le résorcinol, les composés glycidyliques monomères, les résines phénoliques, les résines d'urée ou les résines de mélamine à base de formaldéhyde, les résines d'uréthannes et les diluants; avec 15 à 50% en poids, par rapport au poids de la résine époxydique, d'un agent oxydant capable de réagir avec le dioxyde de soufre pour former un catalyseur pour durcir la résine époxydique.